# EUROPEAN PATENT APPLICATION

(11) **EP 4 397 201 A1**
(43) Date of publication of application: **10.07.2024**
(21) Application number: 22863546.2
(22) Date of filing: 31.08.2022
(51) Int. Cl.: A24F 47/00, A24F 40/51

(54) **AEROSOL GENERATING DEVICE AND CONTROL METHOD THEREOF**

(30) Priority: 02.09.2021 CN 202111024657
(71) Applicant: Shenzhen First Union Technology Co., Ltd., Shenzhen, Guangdong 518000 (CN)
(72) Inventor: HUANG, Linjian, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2022/116326
(87) International publication number: WO 2023/030411

(57) **Abstract**

An aerosol generating device and a control method thereof are provided. The aerosol generating device includes: a battery cell (10), configured to provide a direct current; an inverter (21), including a switch circuit (211) and a resonant circuit (212), where the resonant circuit (212) includes an inductor (L) and a capacitor (C1); and the switch circuit (211) is configured to be alternately turned on and turned off under driving of a pulse signal, so that an alternating current flows through the inductor (L) in the resonant circuit (212) and the inductor generates a varying magnetic field; a susceptor (30), configured to be penetrated by the varying magnetic field to generate heat, to heat an inhalable material to generate an aerosol; and a controller (22), configured to adjust a duty ratio and/or a frequency of the pulse signal based on a real-time voltage of the battery cell (10). According to the foregoing aerosol generating device, the duty ratio and/or the frequency of the pulse signal that drives the switch circuit (211) are adjusted based on the real-time voltage of the battery cell (10), thereby avoiding the problems that a pre-heating speed of a heating device is inconsistent and the inhalation experience of a user is affected due to a voltage decrease of the battery cell (10).

## Description

### CROSS-REFERENCE TO RELATED APPLICATIONS

This application claims priority to Chinese Patent Application No. 202111024657.8, filed with the China National Intellectual Property Administration on September 2, 2021 and entitled "AEROSOL GENERATING DEVICE AND CONTROL METHOD THEREOF", which is incorporated herein by reference in its entirety.

### TECHNICAL FIELD

Embodiments of this application relate to the field of heat not burning low-temperature cigarette device technologies, and in particular, to an aerosol generating device and a control method thereof.

### BACKGROUND

Tobacco products (such as cigarettes, cigars, and the like) burn tobacco during use to produce tobacco smoke. Attempts are made to replace these tobacco-burning products by making products that release compounds without burning.

An example of this type of products is a heating device that releases compounds by heating rather than burning materials. In known devices, tobacco products are heated through an electromagnetic induction heating heater to generate an aerosol for inhalation.

In a process of implementing this application, the inventor discovers problems existing in the above-mentioned heating device is that as a use time of the heating device increases, a voltage of a battery cell decreases, which easily causes an inconsistent pre-heating speed of the heating device, and thereby affecting the inhalation experience of a user.

### SUMMARY

Embodiments of this application provide an aerosol generating device and a control method thereof, aiming to resolve problems of an inconsistent pre-heating speed and poor inhalation experience in existing electromagnetic induction heating devices.

A first aspect of the embodiments of this application provides an aerosol generating device, including:
a battery cell, configured to provide a direct current;
an inverter, including a switch circuit and a resonant circuit, where the resonant circuit includes an inductor and a capacitor; and the switch circuit is configured to be alternately turned on and turned off under driving of a pulse signal, so that an alternating current flows through the inductor in the resonant circuit and the inductor generates a varying magnetic field;
a susceptor, configured to be penetrated by the varying magnetic field to generate heat, to heat an inhalable material to generate an aerosol; and
a controller, configured to adjust a duty ratio and/or a frequency of the pulse signal based on a real-time voltage of the battery cell.

Another aspect of the embodiments of this application further provides a control method of an aerosol generating device, where the aerosol generating device includes:
a battery cell, configured to provide a direct current;
an inverter, including a switch circuit and a resonant circuit, where the resonant circuit includes an inductor and a capacitor; and the switch circuit is configured to be alternately turned on and turned off under driving of a pulse signal, so that an alternating current flows through the inductor in the resonant circuit and the inductor generates a varying magnetic field; and
a susceptor, configured to be penetrated by the varying magnetic field to generate heat, to heat an inhalable material to generate an aerosol; and
the method includes:
   adjusting a duty ratio and/or a frequency of the pulse signal based on a real-time voltage of the battery cell.

According to the aerosol generating device and the control method thereof provided in the embodiments of this application, the duty ratio and/or the frequency of the pulse signal that drives the switch circuit are adjusted based on the real-time voltage of the battery cell, thereby avoiding the problems of a pre-heating speed of a heating device is inconsistent and the inhalation experience of a user is affected due to a voltage decrease of the battery cell.

### BRIEF DESCRIPTION OF THE DRAWINGS

One or more embodiments are exemplarily described with reference to the corresponding figures in the accompanying drawings, and the exemplary descriptions do not constitute a limitation to the embodiments. Components in the accompanying drawings that have same reference numerals are represented as similar components, and unless otherwise particularly stated, the figures in the accompanying drawings are not drawn to scale.
FIG. 1 is a schematic structural diagram of an aerosol generating device according to an embodiment of this application;
FIG. 2 is a schematic diagram of a circuit according to an embodiment of this application;
FIG. 3 is another schematic diagram of a circuit according to an embodiment of this application;
FIG. 4 is a schematic diagram of voltage and current changes of an LC resonant circuit according to an embodiment of this application; and
FIG. 5 is a schematic diagram of a temperature curve of a susceptor according to an embodiment of this application.

### DETAILED DESCRIPTION

For ease of understanding of this application, this application is described in more detail below with reference to the accompanying drawings and specific implementations.

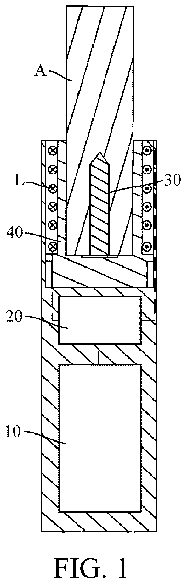

An embodiment of this application provides an aerosol generating device. For a structure of the device, reference may be made to FIG. 1, including:
a chamber, where an aerosol generation product A is removably received in the chamber;
an inductor L, configured to generate a varying magnetic field under an alternating current;
a susceptor 30, at least partially extending in the chamber and configured to be inductively coupled to the inductor L, where the susceptor 30 is penetrated by the varying magnetic field to generate heat, to further heat an inhalable material in the aerosol generation product A, so that at least one component of the aerosol generation product A is evaporated to form an aerosol for inhalation; and
a battery cell 10, configured to provide a direct current, where preferably, the battery cell 10 is a rechargeable battery cell; and
a circuit 20, configured to control an overall operation of the aerosol generating device.

According to settings in product use, the inductor L may include a cylindrical inductor coil wound into a helical shape, as shown in FIG. 1. The cylindrical inductor L wound into the helical shape may have a radius ranging from about 5 mm to about 10 mm, and particularly, the radius may be about 7 mm. The cylindrical inductor L wound into the helical shape may have a length ranging from about 8 mm to about 14 mm, and a number of turns of the inductor L may range from 8 to 15. Correspondingly, an inner volume may range from about 0.15 cm³ to about 1.10 cm³.

In a preferred embodiment, a direct current voltage provided by the battery cell 10 ranges from about 2.5 V to about 9.0 V, and a direct current provided by the battery cell 10 ranges from about 2.5 A to about 20 A.

In a preferred embodiment, the susceptor 30 is generally in a shape of a pin or a blade, which is beneficial for inserting into the aerosol generation product A. In addition, the susceptor 30 may have a length of about 12 mm, a width of about 4 mm, and a thickness of about 0.5 mm, and may be made of stainless steel of grade 430 (SS430). As an alternative embodiment, the susceptor 30 may have a length of about 12 mm, a width of about 5 mm, and a thickness of about 0.5 mm, and may be made of stainless steel of grade 430 (SS430). In other variant embodiments, the susceptor 30 may alternatively be constructed in a cylindrical or a tubular shape. An internal space of the susceptor during use forms the chamber that is configured to receive the aerosol generation product A, and the susceptor generates an aerosol for inhalation by heating an outer periphery of the aerosol generation product A. The susceptor may alternatively be made of stainless steel of grade 420 (SS420) and an alloy material containing iron/nickel (such as permalloy).

In an embodiment shown in FIG. 1, the aerosol generating device further includes a holder 40 that is configured to dispose the inductor L and the susceptor 30, and a material of the holder 40 may include a non-metal material with high temperature resistance, such as PEEK, ceramic, or the like. During implementation, the inductor L is fixed by being wound on an outer wall of the holder 40. In addition, as shown in FIG. 1, the holder 40 has a hollow tubular shape, and a portion of the tubular hollow space forms the chamber that is configured to receive the aerosol generation product A.

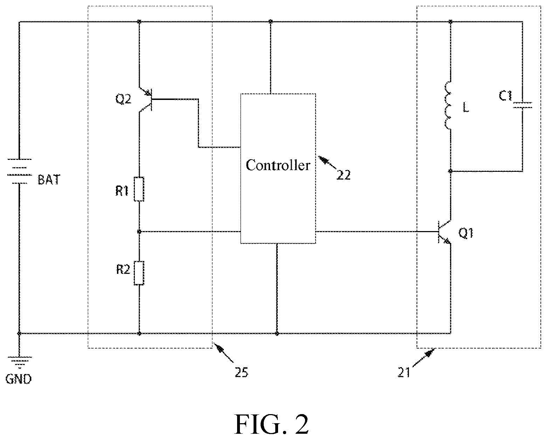

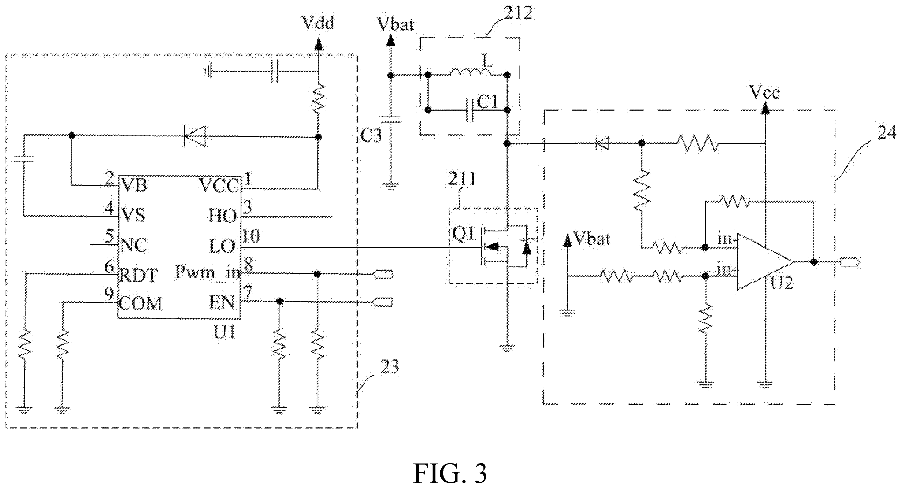

In an optional implementation, the susceptor 30 is made of the foregoing susceptible materials, or is obtained by electroplating or depositing to form a susceptible material coating on an outer surface of a ceramic or another heat-resistant base material.
in a preferred embodiment, a structure and basic components of the circuit 20 may be shown in FIG. 2 and FIG. 3, including:
an inverter 21, including a switch circuit 211 and a resonant circuit 212. The switch circuit 211 includes a transistor Q1; and the resonant circuit 212 is formed by connecting a capacitor C1 with the inductor L in parallel, thereby forming a parallel LC resonant circuit.

The transistor Q1 is alternately turned on and turned off under driving of a pulse signal, to guide a current between the battery cell 10 and the resonant circuit 212 to make the resonant circuit 212 to resonate, so as to form an alternating current flowing through the inductor L, thereby making the inductor L to generate a varying magnetic field to induce the susceptor 30 to generate heat. In the embodiments shown in FIG. 2 and FIG. 3, the transistor Q1 is a commonly used MOS tube, where the MOS tube is turned on or turned off based on a PWM pulse signal received by a gate. In a preferred implementation, a frequency of the PWM pulse signal ranges from 80 KHz to 400 KHz; and more specifically, the frequency may approximately range from 200 KHz to 300 KHz.

In the embodiments shown in FIG. 2 and FIG. 3, turn-on or turn-off of the switch circuit 211 is controlled by a PWM pulse signal generated by a driver 23, and the driver 23 includes a drive chip U1 and a peripheral circuit thereof. Certainly, the driver 23 is generated based on a PWM pulse control signal generated by a controller 22. In other embodiments, the PWM pulse signal may alternatively be generated by a driver that is integrated in the controller 22.

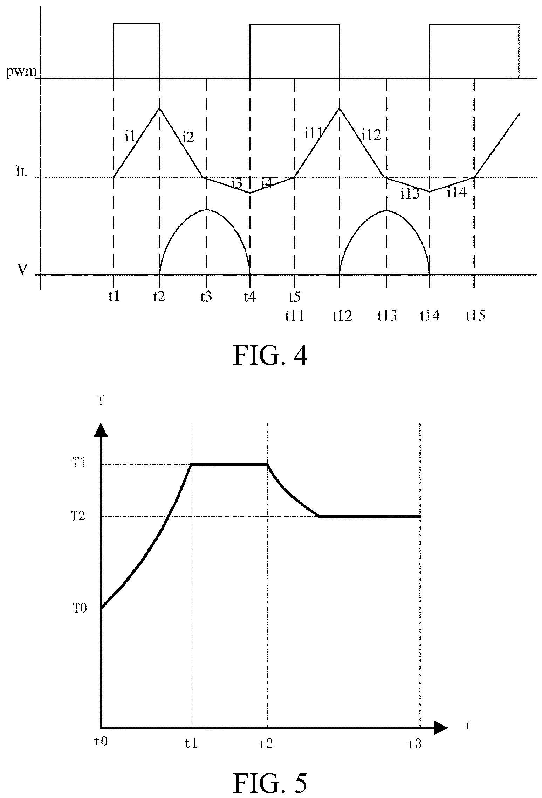

In a preferred implementation, turn-on time and turn-off time of the transistor Q1 are different, that is, a duty ratio of the PWM pulse signal is not 50%, and a resonance process of the resonant circuit 212 is asymmetric, so that the resonant circuit 212 maintains a sufficient resonance voltage to maintain a strength of the magnetic field. Specifically, FIG. 4 shows a change process of a resonant current/voltage in a cycle from t1 to t5 driven by the resonant circuit 212 of the circuit 20 shown in FIG. 3 in a symmetrical resonant manner with a duty ratio of 50%. The process includes:
S1. During a time period from t1 to t2: the driver 23 sends a PWM pulse signal to a gate of a MOS tube Q1 to turn on the MOS tube. After the MOS tube is turned on, a current i1 flows through the inductor L from a positive pole of the battery cell 10, and due to coil inductive reactance, sudden change of the current is not allowed; and therefore, a linearly increasing current i1 is formed by charging the inductor L during the time period from t1 to t2.
S2. During a time period from t2 to t3: at the moment t2, a PWM pulse ends, and the MOS tube Q1 is turned off. Similarly, due to inductive reactance of the inductor L, the current cannot immediately become 0. Instead, the capacitor C1 is charged, to generate a current i2 that charges the capacitor C 1.

Until the moment t3, the capacitor C1 is fully charged and the current becomes 0. At this moment, all magnetic field energy of the inductor L is converted into electric field energy of the capacitor C1, and a peak voltage is reached at both ends of the capacitor C1. A voltage formed between a drain and a source of the MOS tube Q1 is actually a sum of a reverse pulse peak voltage and a voltage outputted by the positive pole of the battery cell 10.

S3. During a time period from t3 to t4: the capacitor C1 is discharged through the inductor L until discharging is completed, i3 reaches a maximum value, and a voltage at the both ends of the capacitor C1 gradually decreases until disappears. At this moment, all the electrical energy in the capacitor C1 is converted into magnetic energy in the inductor L. Similarly, due to the inductive reactance, the current flowing through the inductor L gradually changes in a direction opposite to the directions in S1 and S2. The capacitor C1 discharges until an electromotive force at the both ends of the inductor L is reversed.

S4. During a time period from t4 to t5: at the moment t4, the MOS tube Q1 is turned on again, the inductor L forms a return current with a filtering capacitor C3, energy of the inductor L recoils to the filtering capacitor C3 to form a gradually decreasing current i4, and the cycle ends at the moment t5 until the current decreases to 0. Then, a next resonance cycle starts.

From the foregoing description, it may be learned that at the moment t4, the voltage between the drain and the source of the MOS tube Q1 crosses zero, and during the resonance process, the MOS tube Q1 switches a turn-on/turn-off state at the moment when the voltage between the drain and the source crosses zero.

Further, in FIG. 3 and FIG. 4, a synchronous detection unit 24 is configured to detect a resonance voltage of the resonant circuit 212. Specifically, as shown in FIG. 4, the synchronous detection unit 24 mainly includes a zero crossing comparator U2, where the zero crossing comparator U2 is configured to take a sample and detect a zero crossing point of a drain voltage signal of the MOS tube Q1, so that only the controller 22 controls switching of the MOS tube Q1 between tum-on/tum-off based on a zero crossing moment.

The embodiment shown in FIG. 2 further proposes to detect a real-time voltage of the battery cell 10 to control a voltage detection circuit 25 of the transistor Q1, where the voltage detection circuit 25 includes a controllable switch tube Q2, a voltage dividing resistor R1, and a voltage dividing resistor R2. Under the action of a control signal of the controller 22, the controllable switch tube Q2 may turn on or turn off the voltage detection circuit 25.

Based on the real-time voltage of the battery cell 10 that is detected by the voltage detection circuit 25, the controller 22 may adjust a duty ratio and/or a frequency of the PWM pulse signal outputted to the MOS tube Q1. If a detected real-time voltage of the battery cell 10 is relatively low, the duty ratio of the PWM pulse signal may be increased and/or the frequency of the PWM pulse signal may be reduced. If a detected real-time voltage of the battery cell 10 is relatively high, the duty ratio of the PWM pulse signal may be reduced and/or the frequency of the PWM pulse signal may be increased. In a specific implementation, a correlation table of the real-time voltage of the battery cell 10 and the duty ratio of the PWM pulse signal and/or the frequency of the PWM pulse signal may be established in advance. Based on the real-time voltage of the battery cell 10 that is detected by the voltage detection circuit 25, the duty ratio of the PWM pulse signal and/or the frequency of the PWM pulse signal may be determined by looking up the table, so that the controller 22 controls the PWM pulse signal based on a determined duty ratio and/or frequency.

In a preferred implementation, the controller 22 is configured to adjust, if the real-time voltage of the battery cell 10 is less than or equal to a first preset voltage threshold, the duty ratio and/or the frequency of the PWM pulse signal based on the real-time voltage of the battery cell 10.

In this implementation, based on the real-time voltage of the battery cell 10 that is detected by the voltage detection circuit 25, whether the real-time voltage of the battery cell 10 is less than or equal to the first preset voltage threshold is determined. In a case that the real-time voltage of the battery cell 10 is less than or equal to the first preset voltage threshold, the duty ratio and/or the frequency of the PWM pulse signal is adjusted based on the real-time voltage of the battery cell 10. In this implementation, if the real-time voltage of the battery cell 10 is greater than the first preset voltage threshold, the duty ratio and/or the frequency of the PWM pulse signal do not need to be adjusted. Generally, the first preset voltage threshold is slightly lower than a maximum operating voltage of the battery cell 10. Taking 4.2 V as an example, the first preset voltage threshold may be set to 4.1 V.

In a preferred implementation, the controller 22 is configured to drive, if the real-time voltage of the battery cell 10 is less than or equal to a second preset voltage threshold, the transistor Q1 to be alternately turned on and turned off based on a duty ratio and/or a frequency of a pulse signal that is corresponding to the second preset voltage threshold, where the second preset voltage threshold is less than the first preset voltage threshold.

In this implementation, based on the real-time voltage of the battery cell 10 that is detected by the voltage detection circuit 25, whether the real-time voltage of the battery cell 10 is less than or equal to the second preset voltage threshold is determined. In a case that the real-time voltage of the battery cell 10 is less than or equal to the second preset voltage threshold, the transistor Q1 is driven to be alternately turned on and turned off based on the duty ratio and/or the frequency of the pulse signal corresponding to the second preset voltage threshold. Generally, the second preset voltage threshold ranges from 3 V to 3.6 V; or ranges from 3.1 V to 3.6 V; or ranges from 3.2 V to 3.6 V; or ranges from 3.3 V to 3.6 V; or ranges from 3.3 V to 3.5 V. Preferably, the second preset voltage threshold is set to 3.4 V. The duty ratio and/or the frequency of the pulse signal corresponding to the second preset voltage threshold may be preset or obtained through looking up the foregoing table.

In a preferred implementation, the controller 22 is configured to adjust, if a difference between two consecutive real-time voltages of the battery cell 10 is greater than or equal to a preset difference threshold, the duty ratio and/or the frequency of the PWM pulse signal based on the current real-time voltage of the battery cell 10.

In this implementation, based on the real-time voltage of the battery cell 10 that is detected by the voltage detection circuit 25, whether the difference between two consecutive real-time voltages of the battery cell 10 is greater than or equal to the preset difference threshold is first determined. In a case that the difference between two consecutive real-time voltages of the battery cell 10 is greater than or equal to the preset difference threshold, a corresponding duty ratio of the PWM pulse signal and/or a corresponding frequency of the PWM pulse signal are determined based on the current real-time voltage of the battery cell 10. Therefore, the controller 22 controls the PWM pulse signal based on the determined duty ratio and/or frequency. Preferably, the preset difference threshold is set to 0.1 V.

In a preferred implementation, the controller 22 is configured to adjust the duty ratio and/or the frequency of the PWM pulse signal based on the real-time voltage of the battery cell 10 during a period of controlling the susceptor 30 to rise from an initial temperature to a preset temperature.

In this implementation, a real-time temperature of the susceptor 30 may be obtained by a temperature sensor (not shown in the figure) that is disposed in the aerosol generating device, so that the controller 22 may control the susceptor 30 to rise from the initial temperature to the preset temperature. The preset temperature may be an optimal temperature for an inhalable material to generate an aerosol, in other words, the inhalable material can provide a vapor volume and a temperature that are the most suitable for a user to inhale and taste better at the temperature. Generally, the preset temperature ranges from 150°C to 350°C; or ranges from 180°C to 350°C; or ranges from 220°C to 350°C; or ranges from 220°C to 300°C; or ranges from 220°C to 280°C; or ranges from 220°C to 260°C.

At different voltages of the battery cell 10, driving the transistor Q1 with a same duty ratio and/or frequency may cause inconsistent time for the susceptor 30 to rise from the initial temperature to the preset temperature. For example, at battery cell voltages of 4.2 V and 3.2 V, a difference between time for the susceptor 30 to rise from the initial temperature to the preset temperature ranges from 7s to 8s, affecting the inhalation experience of the user. Therefore, during this period, based on the real-time voltage of the battery cell 10, the duty ratio and/or the frequency of the PWM pulse signal are adjusted, so that the time for the susceptor to rise from the initial temperature to the preset temperature may be consistent, and the inhalation experience of the user is also better.

In a further preferred implementation, the controller 22 is further configured to obtain a real-time temperature of the susceptor 30 during the period of controlling the susceptor 30 to rise from the initial temperature to the preset temperature; and adjust, if the real-time temperature of the susceptor 30 is lower than a preset temperature threshold, the duty ratio and/or the frequency of the PWM pulse signal based on the real-time voltage of the battery cell 10.

In this implementation, based on the real-time temperature of the susceptor 30 that is detected by the temperature sensor, whether the real-time temperature of the susceptor 30 is lower than the preset temperature threshold is determined; and if the real-time temperature of the susceptor 30 is lower than the preset temperature threshold, the duty ratio and/or the frequency of the PWM pulse signal are adjusted based on the real-time voltage of the battery cell 10. Otherwise, the duty ratio and/or the frequency of the PWM pulse signal may not be adjusted.

In a preferred implementation, the controller 22 is configured to adjust the frequency of the PWM pulse signal in a positive correlation manner based on a voltage value of the real-time voltage of the battery cell 10, or adjust the duty ratio of the PWM pulse signal in a negative correlation manner based on a voltage value of the real-time voltage of the battery cell 10.

Specifically, when a first voltage value of the battery cell 10 is received, the controller controls to output a pulse voltage of a first duty ratio; and when a second voltage value of the battery cell 10 that is less than the first voltage value is received, the controller controls to output a pulse voltage of a second duty ratio, where the first duty ratio is less than the second duty ratio; or
when a first voltage value of the battery cell 10 is received, the controller controls to output a pulse voltage of a first frequency, and when a second voltage value of the battery cell 10 that is less than the first voltage value is received, the controller controls to output a pulse voltage of a second frequency, where the first frequency is greater than the second frequency.

In an alternative implementation, the controller 22 is configured to control to output a pulse voltage of a first duty ratio or a first frequency when the received voltage value of the real-time voltage of the battery cell 10 is within a first interval, and control to output a pulse voltage of a second duty ratio or a second frequency when the received voltage value of the real-time voltage of the battery cell 10 is within a second interval that is different from the first interval.

Another embodiment of this application provides a control method of an aerosol generating device, where the method includes: adjusting a duty ratio and/or a frequency of a PWM pulse signal based on a real-time voltage of a battery cell 10. For the aerosol generating device, reference may be made to the foregoing content, and for implementations of the method, reference may be made to the content of the controller 22 mentioned above. Details are not described herein.

With reference to FIG. 5, the following describes a control process of the aerosol generating device.

FIG. 5 is a schematic diagram of a temperature curve of a susceptor 30 according to an implementation of this application. A horizontal coordinate t of the temperature curve represents time, and a vertical coordinate T represents a temperature. Specifically, at the moment t0, an initial temperature of the susceptor 30 is T0.

During a time period from t0 to t1, a controller 22 controls heating power of the susceptor 30 to heat at full power of the battery cell 10. At the moment t1, the susceptor 30 is heated to a target temperature T1, for example, 250°C.

Starting from the moment t0, the controller 22 obtains a real-time temperature of the susceptor 30 through a temperature sensor and obtains a real-time voltage of the battery cell 10 through a voltage detection circuit 25 at intervals; if the real-time temperature of the susceptor 30 is lower than a preset temperature threshold, adjusts a duty ratio and/or a frequency of a PWM pulse signal based on the real-time voltage of the battery cell 10; and if the real-time temperature of the susceptor 30 is not lower than the preset temperature threshold, continues to obtain the real-time temperature of susceptor 30 and the real-time voltage of the battery cell 10. In this way, during the time period from t0 to t1, through continuous detection and adjustment on the PWM pulse signal, regardless of the voltage of the battery cell 10, time for the susceptor 30 to be heated from the initial temperature T to the target temperature T1 remains consistent, thereby improving the inhalation experience of the user.

During a time period from t1 to t2, the controller 22 controls electrical power provided by the battery cell 10 to the susceptor 30 and controls the susceptor 30 to maintain at the target temperature T1 (250°C) for a period of time (that is, the time period from t1 to t2). At the moment t2, the controller 22 may output a prompt signal for inhaling an aerosol, to prompt the user to inhale the aerosol.

During a time period from t2 to t3, after outputting the prompt signal for inhaling an aerosol, the controller 22 controls heating power provided by the battery cell 10 to the susceptor 30 and controls the temperature of the susceptor 30 to decrease from T1 (250°C) to T2 (for example, 200°C). Subsequently, the controller 22 controls the electrical power provided by the battery cell 10 to the susceptor 30, to control the susceptor 30 to maintain at T2 for a period of time.

It should be noted that, the specification of this application and the accompanying drawings thereof illustrate exemplary embodiments of this application, but this application is not limited to the embodiments described in the specification. Further, a person of ordinary skill in the art may make improvements or modifications according to the foregoing description, and all the improvements and modifications shall fall within the protection scope of the appended claims of this application.

## Claims

1. An aerosol generating device, comprising:
a battery cell, configured to provide a direct current;
an inverter, comprising a switch circuit and a resonant circuit, wherein the resonant circuit comprises an inductor and a capacitor; and the switch circuit is configured to be alternately turned on and turned off under driving of a pulse signal, so that an alternating current flows through the inductor in the resonant circuit and the inductor generates a varying magnetic field;
a susceptor, configured to be penetrated by the varying magnetic field to generate heat, to heat an inhalable material to generate an aerosol; and
a controller, configured to adjust a duty ratio and/or a frequency of the pulse signal based on a real-time voltage of the battery cell.

2. The aerosol generating device according to claim 1, wherein the controller is further configured to adjust the duty ratio and/or the frequency of the pulse signal based on the real-time voltage of the battery cell during a period of controlling the susceptor to rise from an initial temperature to a preset temperature.

3. The aerosol generating device according to claim 2, wherein the controller is further configured to obtain a real-time temperature of the susceptor during the period of controlling the susceptor to rise from the initial temperature to the preset temperature; and adjust, if the real-time temperature of the susceptor is lower than a preset temperature threshold, the duty ratio and/or the frequency of the pulse signal based on the real-time voltage of the battery cell.

4. The aerosol generating device according to claim 1, wherein the controller is further configured to adjust, if the real-time voltage of the battery cell is less than or equal to a first preset voltage threshold, the duty ratio and/or the frequency of the pulse signal based on the real-time voltage of the battery cell.

5. The aerosol generating device according to claim 4, wherein the controller is further configured to drive, if the real-time voltage of the battery cell is less than or equal to a second preset voltage threshold, the switch circuit to be alternately turned on and turned off based on a duty ratio and/or a frequency of a pulse signal corresponding to the second preset voltage threshold, wherein the second preset voltage threshold is less than the first preset voltage threshold.

6. The aerosol generating device according to claim 5, wherein the second preset voltage threshold ranges from 3 V to 3.6 V; or ranges from 3.1 V to 3.6 V; or ranges from 3.2 V to 3.6 V; or ranges from 3.3 V to 3.6 V; or ranges from 3.3 V to 3.5 V.

7. The aerosol generating device according to claim 1, wherein the controller is further configured to adjust, if a difference between two consecutive real-time voltages of the battery cell is greater than or equal to a preset difference threshold, the duty ratio and/or the frequency of the pulse signal based on a current real-time voltage of the battery cell.

8. The aerosol generating device according to claim 1, wherein the controller is further configured to adjust the frequency of the pulse signal in a positive correlation manner based on a voltage value of the real-time voltage of the battery cell, or adjust the duty ratio of the pulse signal in a negative correlation manner based on a voltage value of the real-time voltage of the battery cell.

9. The aerosol generating device according to claim 8, wherein the controller is further configured to control to output a pulse voltage of a first duty ratio when a first voltage value of the battery cell is received; and control to output a pulse voltage of a second duty ratio when a second voltage value of the battery cell that is less than the first voltage value is received, wherein the first duty ratio is less than the second duty ratio; or
control to output a pulse voltage of a first frequency when a first voltage value of the battery cell is received, and control to output a pulse voltage of a second frequency when a second voltage value of the battery cell that is less than the first voltage value is received, wherein the first frequency is greater than the second frequency.

10. The aerosol generating device according to claim 8, wherein the controller is further configured to control to output a pulse voltage of a first duty ratio or a first frequency when the received voltage value of the real-time voltage of the battery cell is within a first interval, and control to output a pulse voltage of a second duty ratio or a second frequency when the received voltage value of the real-time voltage of the battery cell is within a second interval that is different from the first interval.

11. The aerosol generating device according to claim 1, further comprising a voltage detection circuit, configured to detect the real-time voltage of the battery cell.

12. The aerosol generating device according to claim 11, wherein the voltage detection circuit comprises a controllable switch tube and a voltage dividing resistor that are connected in series; and
the controllable switch tube turns on or turns off the voltage detection circuit under the action of a control signal of the controller.

13. The aerosol generating device according to claim 1, wherein the inductor and the capacitor are connected in parallel to form a parallel LC resonant circuit.

14. A control method of an aerosol generating device, wherein the aerosol generating device comprises:
a battery cell, configured to provide a direct current;
an inverter, comprising a switch circuit and a resonant circuit, wherein the resonant circuit comprises an inductor and a capacitor; and the switch circuit is configured to be alternately turned on and turned off under driving of a pulse signal, so that an alternating current flows through the inductor in the resonant circuit and the inductor generates a varying magnetic field; and
a susceptor, configured to be penetrated by the varying magnetic field to generate heat, to heat an inhalable material to generate an aerosol; and
the method comprises:
adjusting a duty ratio and/or a frequency of the pulse signal based on a real-time voltage of the battery cell.
